# EUROPÄISCHE PATENTSCHRIFT

(11) **EP 3 832 186 B1**
(45) Veröffentlichungstag und Bekanntmachung des Hinweises auf die Patenterteilung: **21.09.2022**
(21) Anmeldenummer: 20208544.5
(22) Anmeldetag: 19.11.2020
(51) Int. Cl.: F16L 41/00, F16L 41/08, F16L 25/14

(54) **ANSCHLUSSSYSTEM MIT EINER TRENNKENNZEICHNUNG**
CONNECTION SYSTEM WITH SEPARATION INDICATOR
SYSTÈME DE RACCORDEMENT POURVU DE MARQUAGE DE SÉPARATION

(30) Priorität: 04.12.2019 DE 202019106754 U
(43) Veröffentlichungstag der Anmeldung: 09.06.2021
(73) Patentinhaber: REHAU Industries SE & Co. KG, 95111 Rehau (DE)
(72) Erfinder: Lipphardt, Tobias, 91334 Hemhofen (DE); Sieber, Jürgen, 91074 Herzogenaurach (DE)

(56) Entgegenhaltungen:
- EP-A2- 2 743 558
- DE-A1- 19 617 437
- DE-A1-102008 021 470
- DE-U1-202015 106 589
- DE-U1-202015 106 969

## Beschreibung

Die Erfindung betrifft ein Anschlusssystem zum Anschließen eines Rohres an ein Hauptrohr. Weiterhin betrifft die Erfindung ein Rohrsystem, das mit einem derartigen Anschlusssystem ausgestattet ist.

Der Anschluss eines Rohres an ein Hauptrohr ist ein häufig anzutreffender Fall, wenn beispielsweise Wohngebiete erschlossen werden und Abwasserrohre aus den einzelnen Häusern oder Wohnblocks an ein Hauptrohr anzubinden sind. Hierzu sind Anschlusssysteme notwendig, die einfach zu installieren sind, die die für diesen Zweck notwendige Dichtheit aufweisen und kostengünstig sind. Insbesondere ist eine solche nachträgliche Installation an einem Hauptrohr eine Arbeit, die unter Kostengesichtspunkten so einfach wie möglich bewerkstelligt werden soll, um den Aushub für die Baugrube zu minimieren, dennoch aber einen praktikablen - vor allem aber dauerhaften und dichten - Anschluss herzustellen.

So ist beispielsweise aus der DE 10 2008 021 470 A1 bekannt, ein Rohr mithilfe eines Anschlusssystems an ein Hauptrohr anzuschließen. Die Dichtheit wird hierbei durch einen Elastomereinsatz erreicht, der in der Queröffnung des Hauptrohres positioniert ist. Allgemein besteht ein großes Interesse, einfachere Anschlusssysteme mit einem hohen Grad an Dichtheit zur Verfügung gestellt zu bekommen, die des Weiteren in schneller und sicherer Weise installierbar sind.

Die vorgenannte bewährte Technik stößt an ihre Grenzen, wenn ein Hauptrohr aus Beton, das stahlarmiert ist, vorliegt. Bei einem solchen Hauptrohr wird zwangsläufig die Stahlbewehrung im Bereich der herzustellenden Queröffnung freigelegt. Dies kann unter dem Einfluss von Feuchtigkeit und Sauerstoff rosten, was zu einer Beschädigung bis hin zur partiellen Zerstörung des Hauptrohres führen kann.

Ein Anschlusssystem zum Anschließen eines Rohres an ein solches Hauptrohr, insbesondere an ein Hauptrohr aus stahlarmiertem Beton, muss daher nicht nur die Dichtheit an der Queröffnung sicherstellen, sondern auch verhindern, dass in den Spalt zwischen der Innenoberfläche des Hauptrohres und dem Anschlusssystem Feuchtigkeit und Sauerstoff eindringt, um so die Bewehrung vor Rostbildung und einer nachfolgenden Beschädigung oder Zerstörung des Hauptrohres zu schützen.

Gleiches gilt auch für Schächte, an denen Anschlüsse nachträglich herzustellen sind, auch diese sind häufig aus stahlarmiertem Beton hergestellt.

Da eine Vielzahl von unterschiedlichen Hauptrohren - insbesondere solchen mit einer unterschiedlichen Dicke der Rohrwandung - verlegt sind, besteht der Bedarf darin, dass eine möglichst universelle, das heißt einen großen Rohrwanddickenbereich abdeckende Lösung in Form eines Anschlusssystems am Markt verfügbar ist.

Eine weitere Aufgabe der Erfindung ist es, ein Rohrsystem anzugeben, das ein Anschlusssystem umfasst.

Hier setzt die Erfindung ein, die es sich zur Aufgabe gemacht hat, ein Anschlusssystem und ein Rohrsystem bereitzustellen, das die o.g. Probleme löst.

Die Lösung der ersten Aufgabe erfolgt gemäß Anspruch 1.

Es wurde im Rahmen der vorliegenden Erfindung erkannt, dass ein Anschlusssystem zum Anschließen eines Rohres an ein Hauptrohr, einen Schacht, oder dergleichen, an einer Queröffnung, wobei das Anschlusssystem zu diesem Zweck mit dem Hauptrohr oder dem Schacht verbindbar ist, mit einem hohlstopfenförmigen, zumindest teilweise weichen Installationseinsatz, dessen Außenseite an die Queröffnung angepasst ist, und dessen Innenseite einen konischen Schraubbereich aufweist, wobei der Installationseinsatz einen Endabschnitt aufweist, der durch die Queröffnung des Hauptrohres oder Schachts in dieses / diesen teilweise einschiebbar ist, und wobei eine äußere Anlagefläche des Installationseinsatzes in einem Verbindungszustand, in dem das Anschlusssystem mit dem Hauptrohr oder Schacht verbunden ist, wenigstens teilweise eine Hauptrohrinnenfläche, die an die Queröffnung angrenzt und diese umgibt, kontaktiert, und einem relativ härteren Anschlussstutzen, der ein Eingriffsende, einen konischen Mittelteil mit Außengewinde und ein Antriebsende aufweist, diese Aufgabe löst, wenn erfindungsgemäß vorgesehen ist, dass an dem Endabschnitt wenigstens eine Trennkennzeichnung ausgebildet ist, die wenigstens teilweise um den äußeren Umfang des Endabschnitts umlaufend ausgebildet ist, wobei die Trennkennzeichnung an die Form der Innenoberfläche des Hauptrohres, des Schachts, oder dergleichen im Bereich der Queröffnung angepasst ist.

Mithilfe dieses Anschlusssystems gelingt es, eine vollständige Dichtheit zwischen dem angeschlossenen Rohr und dem Hauptrohr, und insbesondere einem Hauptrohr aus stahlarmiertem Beton, herzustellen.

Weiterhin ist es mit diesem Anschlusssystem gemäß vorliegender Erfindung möglich, eine möglichst universelle, das heißt einen großen Rohrwanddickenbereich abdeckende Lösung für den Anschluss eines Rohres an ein Hauptrohr oder einen Schacht oder dergleichen zur Verfügung zu stellen.

Hierbei kann der Endabschnitt des Installationseinsatzes, der zunächst mit einem Übermaß hinsichtlich der Länge des Endabschnitts hergestellt ist, nach Bedarf entlang der Trennkennzeichnung derart gekürzt werden, dass auf jeden Fall bei der Installation des Anschlusssystems die frei liegende Stahlbewehrung des Hauptrohres aus stahlarmiertem Beton vor dem Einfluss von Feuchtigkeit und Sauerstoff geschützt ist. Hierzu kann der Endabschnitt des zunächst mit Überlänge vorliegenden Installationseinsatzes ohne Mühe auf die notwendige Länge gekürzt werden, wobei die Länge des Endabschnitts dann so zu wählen ist, dass auf jeden Fall alle frei liegenden Bewehrungen bei der Installation bedeckt sind. Ein derartiges erfindungsgemäßes Anschlusssystem ist gegenüber dem Stand der Technik wesentlich verbessert, was den Schutz der Stahlbewehrung des Hauptrohres angeht, es ist einfach herzustellen, kostengünstig bereitzustellen und ohne besonderen Aufwand zu installieren, und in hohem Maße fluiddicht.

Bei der vorliegenden Erfindung kann es sich als überaus vorteilhaft erweisen, wenn vorgesehen ist, dass das Anschlusssystem derart ausgebildet ist, dass am Endabschnitt des Installationseinsatzes eine Mehrzahl von Trennkennzeichnungen angeordnet ist.

Durch das Vorsehen, dass am Endabschnitt des Installationseinsatzes eine Mehrzahl von Trennkennzeichnungen angeordnet ist, kann das installierende Personal ohne Mühe die geeignete Trennkennzeichnung auswählen, entlang der der Endabschnitt des Installationseinsatzes nach Bedarf abzutrennen ist.

Als besonders günstig kann sich bei der vorliegenden Erfindung ergeben, wenn bei dem Anschlusssystem vorgesehen ist, dass am Endabschnitt des Installationseinsatzes eine Anzahl von 2, 3, 4, 5, 6, 7 oder 8 Trennkennzeichnungen angeordnet ist.

Durch die Maßnahme, am Endabschnitt des Installationseinsatzes eine Anzahl von 2, 3, 4, 5, 6, 7 oder 8 Trennkennzeichnungen anzuordnen, ist es leicht möglich, bei der Installation des Anschlusssystems eine geeignete Länge des Endabschnitts anhand einer der Trennkennzeichnungen auszuwählen und dort die Abtrennung des Endabschnitts in richtiger Weise vorzunehmen.

Die vorliegende Erfindung kann weiter dadurch aufgewertet werden, indem bei dem Anschlusssystem am Endabschnitt des Installationseinsatzes eine Anordnung der Trennkennzeichnungen ausgebildet ist, wobei wenigstens eine Trennkennzeichnung zu ihren jeweiligen nächsten Nachbarn gleich beabstandet ist.

Hierdurch kann eine einfache Konstruktion und ein einfacher Werkzeugbau für den Installationseinsatz realisiert werden, was Kosteneinsparungen mit sich bringt.

Als besonders vorteilhaft kann sich bei der vorliegenden Erfindung erweisen, wenn das Anschlusssystem so ausgebildet ist, dass die Trennkennzeichnung als Markierung oder als Schneidhilfe geformt ist.

Ein Anschlusssystem, das so ausgebildet ist, dass die Trennkennzeichnung als Markierung oder als Schneidhilfe geformt ist, bietet eine wesentliche Erleichterung für das installierende Personal, da so ohne weiteres erkennbar ist, entlang welcher Linie die Kürzung des Endabschnitts des Installationseinsatzes vorzunehmen ist, um eine der Form der Innenoberfläche des Hauptrohres im Bereich des Durchbruchs angepasste Kontur zu bilden.

Eine Markierung als Trennkennzeichnung kann beispielsweise durch eine farbige Bedruckung realisiert werden.

Mit überaus großem Vorteil kann bei dem erfindungsgemäßen Anschlusssystem vorgesehen sein, dass die Schneidhilfe als Nut oder als Steg ausgebildet ist, insbesondere als um den äußeren Umfang des Endabschnitts umlaufende Nut oder Steg ausgebildet ist.

Durch das erfindungsgemäße Vorsehen, dass die Schneidhilfe als Nut oder als Steg ausgebildet ist, insbesondere als um den äußeren Umfang des Endabschnitts umlaufende Nut oder Steg ausgebildet ist, gelingt es sehr leicht, das Abtrennen des Endabschnitts des Installationseinsatzes vorzunehmen, weil die Führung eines Schneidwerkzeuges, wie beispielsweise eines Messers, in einfacher Weise durch eine Nut oder einen Steg ermöglicht wird. Ein versehentliches Abrutschen des Schneidwerkzeugs kann so verhindert oder reduziert werden, was Vorteile mit sich bringt hinsichtlich der exakten Schnittführung, der Fehlerreduktion, aber auch der Arbeitssicherheit.

Eine Nut oder ein Steg als Schneidhilfe kann in einfacher Weise bereits bei der Urformung des Installationseinsatzes vorgesehen sein, indem durch entsprechende Ausbildungen im Werkzeug für die Herstellung bereits diese Strukturen ausgebildet werden können.

In einer bevorzugten Weiterbildung der vorliegenden Erfindung kann vorgesehen sein, dass an dem Endabschnitt des Installationseinsatzes ein Dichtungselement angeordnet ist, das bevorzugt ein unter Zutritt von Wasser quellendes Dichtelement ist. Hierdurch wird gewährleistet, dass im Bereich zwischen dem Endabschnitt und dem Hauptrohr eine hohe Dichtheit gewährleistet ist, wenn die äußere Anlagefläche des Installationseinsatzes an der Hauptrohrinnenfläche des Hauptrohres anliegt. Derart ist verhindert, dass ungewollt Wasser bzw. Feuchtigkeit in den Spalt zwischen dem Installationseinsatz und dem Hauptrohr eintritt. Insbesondere wenn das Dichtungselement ein unter Zutritt von Wasser quellendes Dichtungselement ist, führen bereits geringe Mengen Wasser bzw. Feuchtigkeit dazu, dass das Dichtelement quillt, damit sein Volumen vergrößert und damit eine erhöhte Sicherheit gegen eine eventuelle Undichtheit bzw. Hinterläufigkeit an dieser Stelle gewährleistet.

In vorteilhafter Weise kann das Dichtungselement am Endabschnitt des Installationseinsatzes in einem dafür vorgesehenen Aufnahmeraum aufgenommen sein. Ein solcher Aufnahmeraum kann eine Vertiefung sein, die entlang des Außenumfangs des Endabschnitts des Installationseinsatzes ausgebildet ist, in die das Dichtungselement einsetzbar ist. In einer Weiterbildung der Erfindung kann eine Mehrzahl von Aufnahmeräumen vorgesehen sein, so dass wahlweise in einen oder in mehrere der Aufnahmeräume das Dichtungselement bzw. die Dichtungselemente einsetzbar sind.

Mit großem Vorteil kann das Anschlusssystem derartig ausgebildet sein, dass der Anschlussstutzen ein Polymermaterial enthält oder aus einem Polymermaterial besteht, wobei das Polymermaterial bevorzugt ein Thermoplast, und besonders bevorzugt ein Polyolefin, wie beispielsweise ein Polypropylen oder ein Polyethylen oder ein Polybutylen oder ein Polyamid oder ein Copolymeres der Vorgenannten, oder ein Polyvinylchlorid ist und / oder der Installationseinsatzes ein elastomeres Polymermaterial enthält oder aus einem solchen besteht.

Anschlussstutzen und Installationseinsatz aus Polymermaterial bzw. solche, die ein Polymermaterial enthalten, sind langlebig, inert, stabil, weisen ein geringes Gewicht auf, sind einfach handhabbar, leicht installierbar und können kostengünstig bereitgestellt werden. Für den Installationseinsatz, der aus einem Elastomer-Polymermaterial besteht oder ein solches enthält, kann die Herstellung aus Gummi, Styrol-Butadien-Kautschuk (SBR), Ethylen-Propylen-Dien-Kautschuk (EPDM), Acrylnitril-Butadien-Kautschuk (NBR), Thermoplastisches Elastomer (TPE) oder anderen erfolgen.

Der Installationseinsatz kann in einer alternativen Ausführung auch zweiteilig ausgebildet sein.

Hierzu kann ein Ansatzstück, das etwa hohlzylindrisch ausgebildet ist und ein Ende aufweist, das vom Inneren des Hauptrohrs abgewandt ist, mittels einer Ansatzstückverbindung fluiddicht und fest mit einem Basisteil des Installationseinsatzes zu diesem verbunden ein. Auf diese Weise kann das Ansatzstück beispielsweise aus einem Polymermaterial gebildet sein, das andere Eigenschaften aufweist, als das Basisteil des Installationseinsatzes.

Die Aufgabe der vorliegenden Erfindung, ein Rohrsystem anzugeben, erfährt ihre Lösung in Anspruch 9.

Im Rahmen der vorliegenden Erfindung wurde erkannt, dass ein Rohrsystem dann besonders günstig ausgebildet ist, wenn es wenigstens ein Anschlusssystem, wie vorstehend beschrieben, aufweist. Ein solches Rohrsystem ist gegenüber dem Stand der Technik gerade im Hinblick auf die Dichtigkeit und den Schutz der freiliegenden Bewehrung des Hauptrohres wesentlich verbessert.

Durch ein solches erfindungsgemäßes Anschlusssystem wird ein Rohrsystem in ganz besonderer Weise technisch aufgewertet. Daraus resultieren dann die vorstehend beschriebenen Vorteile.

Das erfindungsgemäße Anschlusssystem ist wie folgt zu montieren:
Zunächst ist im Hauptrohr nach bekanntem Verfahren eine Queröffnung herzustellen, das kann beispielsweise durch einen Bohrvorgang oder einen Fräsvorgang geschehen. Wenn die Queröffnung im Hauptrohr hergestellt ist und wenn der Rand der Queröffnung und die Hauptrohrinnenfläche, die durch den Bohr- oder Fräsprozess erzeugt wurde und die Queröffnung begrenzt, entsprechend geglättet ist, ist dieses im Hinblick auf die Wanddicke des Hauptrohres an der Queröffnung zu vermessen.

Der Endabschnitt des Installationseinsatzes ist entsprechend er ermittelten Wanddicke des Hauptrohres an der Queröffnung soweit zu kürzen, dass das Ende des Endabschnitts nicht über den inneren Rand der Queröffnung des Hauptrohres in das Innere des Hauptrohres hineinragt.

Zum Abschneiden des Endabschnitts kann eine auf der Außenseite des Installationseinsatzes angebrachte Längenangabe genutzt werden.

Der Schnitt zur Kürzung des Endabschnitts des Installationseinsatzes kann in einfacher Weise mit einem Schneidgerät, wie zum Beispiel einem Messer, entlang der an der äußeren Anlagefläche ausgebildeten Trennkennzeichnung, also beispielsweise entlang der Nut, vorgenommen werden, wobei das Schneidgerät durch die Nut sicher geführt wird.

Hierbei wird ein Schnitt derart ausgeführt, dass das Ende des Endabschnitts dann an die Form der Innenoberfläche des Hauptrohres, des Schachts, oder dergleichen im Bereich der Queröffnung angepasst ist.

Anschließend ist der Installationseinsatz in einem deformierten Zustand mit dem Endabschnitt voraus in die Queröffnung des Hauptrohres einzuführen, wobei nach dem Einführen dann die Deformation rückgängig zu machen ist.

Der Anschlussstutzen ist dann soweit - beispielsweise zweieinhalb Umdrehungen - in den Installationseinsatz einzudrehen, dass die Dichtheit des Anschlusssystems hergestellt ist. Durch diese Technik ist sichergestellt, dass eine vollständige Dichtheit des Anschlusssystems durch ein sicheres und dichtes Anliegen der äußeren Anlagefläche des Installationseinsatzes an der Hauptrohrinnenfläche des Hauptrohres vorliegt.

Dadurch ist die Dichtheit gegen ein Hinterlaufen bzw. Hinterwandern der äußeren Anlagefläche des Installationseinsatzes sichergestellt.

Wenn dies geschehen ist, ist der ordnungsgemäße Sitz des Anschlusssystems erreicht. Insbesondere sind so alle frei liegenden Bewehrungen des Hauptrohres im Bereich der Queröffnung bei der Installation bedeckt und geschützt.

Ein derartiges erfindungsgemäßes Anschlusssystem ist gegenüber dem Stand der Technik wesentlich verbessert, was den Schutz der Stahlbewehrung des Hauptrohres angeht, es ist einfach herzustellen, kostengünstig bereitzustellen und ohne besonderen Aufwand zu installieren, und in hohem Maße fluiddicht.

Der Installationseinsatz und der Anschlussstutzen der vorliegenden Erfindung können in einem Polymerformgebungsprozess, wie einem Spritzgussprozess oder einem Rotationsgießprozess oder einem Rotationssinterprozess oder einem Pressprozess oder einem Tiefziehprozess oder einem Extrusionsblasprozess oder einem additiven Fertigungsprozess, wie einem 3D-Druckprozess, oder einer Kombination der vorstehend aufgeführten Prozesse hergestellt sein.

Die vorstehend genannten Prozesse sind geeignet, die vorstehend Genannten gemäß vorliegender Erfindung in großer Stückzahl reproduzierbar, maßhaltig und kostengünstig herzustellen.

Hierdurch werden Installationseinsätze und Anschlussstutzen bereitgestellt, die äußerst widerstandsfähig und fest sind, und die Ansprüche der Kunden bzw. die Vorgaben der einschlägigen Spezifikationen für ihre Anwendung erfüllen.

Es kann sich im Rahmen der vorliegenden Erfindung weiterhin als sehr praktikabel ergeben, wenn vorgesehen ist, dass der Installationseinsatz und / oder der Anschlussstutzen in einem additiven Fertigungsprozess, wie einem 3D-Druckprozess hergestellt ist.

Ein solcher Prozess ist geeignet, einen Installationseinsatz und / oder einen Anschlussstutzen gemäß vorliegender Erfindung in großer Stückzahl reproduzierbar, maßhaltig und kostengünstig herzustellen.

So kann insbesondere vorgesehen sein, dass der Installationseinsatz und / oder der Anschlussstutzen ganz oder teilweise unter Verwendung eines generativen Fertigungsverfahrens, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für einen Installationseinsatz und / oder einen Anschlussstutzen. Hierbei umfasst das Verfahren insbesondere auch die Eingabe von Daten, die einen Installationseinsatz und / oder einen Anschlussstutzen darstellen, in eine Datenverarbeitungsmaschine und die Nutzung der Daten, um einen Installationseinsatz und / oder einen Anschlussstutzen als dreidimensionales Modell darzustellen, wobei das dreidimensionale Modell geeignet ist zur Nutzung bei der Herstellung eines Installationseinsatzes und / oder eines Anschlussstutzens. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Installationseinsatz und / oder einen Anschlussstutzen abgegeben wird und die reflektierte Energie empfangen wird, und wobei ein virtuelles dreidimensionales Modell eines Installationseinsatzes und / oder eines Anschlussstutzens unter Verwendung einer computer-unterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Anwendung findet die Erfindung überall dort, wo aus Rohren bzw. Rohrformteilen, Schächten und weiteren Bauelementen Rohrsysteme gebaut werden, bei denen ein Rohr an ein Hauptrohr bzw. einen Schacht anzuschließen ist.

Es ergeben sich so Anwendungen der vorliegenden Erfindung insbesondere im Bereich der drucklosen Leitungen zur Aufnahme, Leitung und Speicherung von Fluiden. Dies betrifft in erster Linie Systeme für die Abwasser- und solche für die Regenwasserbewirtschaftung. Aber auch in anderen Bereichen, wie beispielsweise der Schwimmbadtechnik, der Landwirtschaft, dem Industrieanlagenbau und weiteren Anwendungsfeldern kann die Erfindung vorteilhaft genutzt werden.

Bei der vorliegenden Erfindung wird davon ausgegangen, dass Rohre bzw. Rohrformteile und die zu verbindenden Bauelemente im Bereich der herzustellenden fluiddichten Verbindung einen Abschnitt mit kreisförmigem Querschnitt aufweisen. Wesentliche Teile der Figurenbeschreibung beziehen sich darauf.

Die Erfindung umfasst selbstverständlich auch Abschnitte mit Querschnitten bei Rohren bzw. Rohrformteilen und zu verbindenden Bauelementen, die von der Kreisform abweichen, also beispielsweise elliptisch, eiförmig, eckig, abgerundet eckig oder Mischformen der vorstehend Genannten darstellen.

Der Vorteil der vorliegenden Erfindung besteht insbesondere auch darin, dass durch die vorstehend geschilderten konstruktiven Maßnahmen eine Abdichtung gegen die Durchbruchlaibung des Durchbruchs, hier als Hauptrohrinnenfläche bezeichnet, erfolgt, wobei die frei liegende Bewehrung eines stahlarmierten Betonhauptrohrs geschützt ist, so dass ein Anschlusssystem vorliegt, das gegenüber solchen des Standes der Technik verbessert ist.

Immer wenn vorstehend von Hauptrohren die Rede war, kann stets ein Hauptrohr durch einen Schacht ersetzt werden, ohne die vorliegende Erfindung zu verlassen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung sind in den Fig. dargestellt und wird in der nachfolgenden Beschreibung näher erläutert.

Hierzu zeigen:
- Fig. 1: eine schematische seitliche geschnittene Ansicht des Installationseinsatzes in einer ersten Ausführung;
- Fig. 2: eine schematische seitliche geschnittene Ansicht des Anschlusssystems;
- Fig. 3: eine schematische seitliche geschnittene Ansicht eines Abschnitts eines Installationseinsatzes in einer zweiten Ausführung.

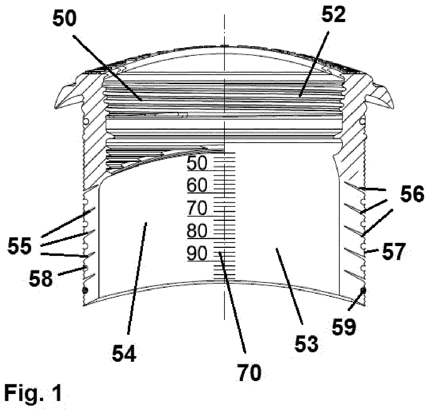

In der Fig. 1 ist eine schematische seitliche geschnittene Ansicht des Installationseinsatzes 50 in einer ersten Ausführung gezeigt.

Im Detail ist hier die Ausbildung des Installationseinsatzes 50 bei dem erfindungsgemäßen Anschlusssystem 100 dargestellt. Der Installationseinsatz 50 ist einteilig ausgebildet.

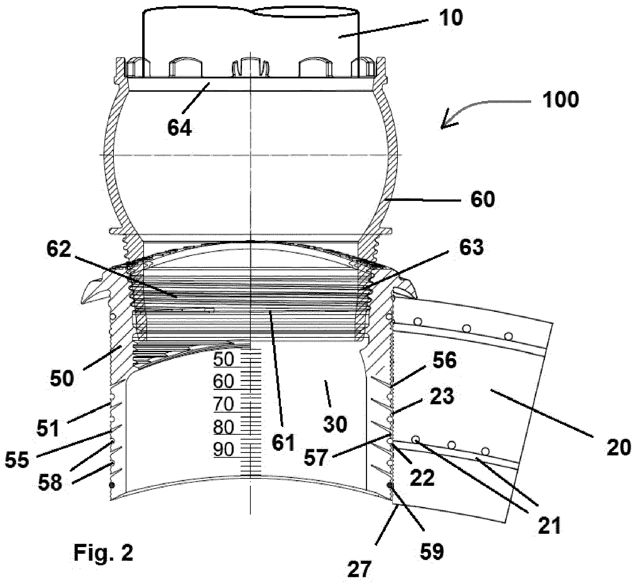

Der Installationseinsatz 50 umfasst einen Endabschnitt 54. Der Endabschnitt 54 des Installationseinsatzes 50 ist der Abschnitt des Installationseinsatzes 50, der dem Inneren des Hauptrohres 20 bei der Installation in der Queröffnung 30 des Hauptrohres 20 zugewandt ist, was in Fig. 2 näher gezeigt ist.

Der Installationseinsatz 50 weist eine äußere Anlagefläche 57 auf, mit der er im Verbindungszustand die Hauptrohrinnenfläche 23 kontaktiert. Durch das Vorsehen von Dichtungsmitteln und / oder Rippen, kombiniert mit einer bestimmten Materialauswahl, die weich oder elastisch ausgebildet sein kann, wird die Dichtheit zwischen der äußeren Anlagefläche 57 des Installationseinsatzes 50 und der Hauptrohrinnenfläche 23 des Hauptrohres 20 hergestellt.

An der äußeren Anlagefläche 57 des Installationseinsatzes 50 sind eine Anzahl an Trennkennzeichnungen 55 ausgebildet. Vorliegend sind in dem Beispiel der Fig. 1 fünf Trennkennzeichnungen 55 in Form von Nuten 56 an dem Endabschnitt 54 des Installationseinsatzes 50 ausgeformt. Die Nuten 56 sind entlang des gesamten Außenumfangs an der äußeren Anlagefläche 57 des Installationseinsatzes 50 ausgebildet und sind an die Form der Innenoberfläche 27 des Hauptrohres 20 im Bereich der Queröffnung 30 angepasst, was später in der Fig. 2 gezeigt ist.

Die Nuten 56 erstrecken sich etwa 70 bis 80 % in die Tiefe der Wandung des Installationseinsatzes 50.

Die Nuten 56 dienen als Schneidhilfe zur Führung eines Schneidgerätes, wie beispielsweise eines Messers, um den Endabschnitt 54 des Installationseinsatzes 50 nach Bedarf zu kürzen, um diesen an die Wanddicke des Hauptrohres 20 anzupassen.

Der Endabschnitt 54 des Installationseinsatzes 50 kann entlang einer Nut 56 soweit abgeschnitten werden, dass er im installierten Zustand des Anschlusssystems 100 dieselbe oder etwa dieselbe Länge aufweist, wie die Wandung des Hauptrohres 20 an der Hauptrohrinnenfläche 23 dick ist, was in der Fig. 2 gezeigt ist.

In alternativen Ausführungen kann die Trennkennzeichnung 55 an der äußeren Anlagefläche 57 des Installationseinsatzes 50 auch ein Steg sein, was hier nicht gezeigt ist. Sowohl ein Steg, wie auch eine Nut 56 kann in einfacher Weise bei der Herstellung des Installationseinsatzes 50 durch entsprechende Ausbildung des dazu notwendigen Werkzeugs leicht realisiert werden. Eine farbige Markierung kann an der äußeren Anlagefläche 57 des Installationseinsatzes 50 in einfacher Weise durch eine Bedruckung aufgebracht werden.

Als Hilfe zur Bemessung des abzuschneidenden Teils des Endabschnitts 54 des Installationseinsatzes 50 kann die auf der Innenseite des Installationseinsatzes 50 aufgebrachte Längenangabe 70 genutzt werden. Mit Hilfe der Längenangabe 70, die beispielswiese auf die Innenseite des Installationseinsatzes 50 geprägt ist, kann nach Ausmessen der Dicke der Wandung des Hauptrohres 20 an der Queröffnung 30 sofort der abzuschneidende Teil des Endabschnitts 54 des Installationseinsatzes 50 ermittelt werden und der entsprechende Schnitt zum Abtrennen des Teils des abzuschneidenden Teils des Endabschnitts 54 des Installationseinsatzes 50 geführt werden.

In der Fig. 1 ist weiter gezeigt, dass am Endabschnitt 54 des Installationseinsatzes 50 Aufnahmeräume 58 ausgebildet sind, die beispielsweise in Form einer umlaufenden Vertiefung geformt sind, um dort ein Dichtungselement 59 aufzunehmen. Bevorzugt ist das Dichtungselement 59 ein unter Zutritt von Wasser quellendes Dichtungselement.

Auf diese Weise kann eine verbesserte Dichtfunktion zwischen dem Endabschnitt 54 des Installationseinsatzes 50 und der Hauptrohrinnenfläche 23 des Hauptrohres 20 hergestellt werden. Sollte es dazu kommen, dass Feuchtigkeit in den Zwischenraum zwischen der äußeren Anlagefläche 57 des Installationseinsatzes 50 und der Hauptrohrinnenfläche 23 des Hauptrohres 20 gelangt, so wird das unter Zutritt von Wasser quellende Dichtungselement 59 aktiviert, expandiert und dichtet zusätzlich ab.

In der Fig. 2 ist eine schematische seitlich geschnittene Ansicht des Anschlusssystems 100 dargestellt.

Die Bezugszeichen in Fig. 2 entsprechen denen aus der vorausgehenden Figur.

Das Anschlusssystem 100 ist hierbei in einem Verbindungszustand gezeigt, bei dem ein Rohr 10 mithilfe des Anschlusssystems 100 mit einem Hauptrohr 20 verbunden ist, sodass das Rohr 10 etwa senkrecht in das Hauptrohr 20 einmündet.

Das Hauptrohr 20, das aus Stahlbeton hergestellt ist, und hier nur auf der rechte Seite der

Fig. 2 als Abschnitt gezeigt ist, weist eine Innenoberfläche 27 auf. Die Innenoberfläche 27 begrenzt das Lumen bzw. Innere des Hauptrohres 20.

Im Hauptrohr 20 ist eine Queröffnung 30 eingebracht, die von einer Hauptrohrinnenfläche 23 begrenzt ist. Die Queröffnung 30 ist beispielsweise durch ein Bohrverfahren oder ein Fräsverfahren hergestellt. Die Queröffnung 30 weist bevorzugt einen kreisrunden Querschnitt auf, kann aber auch anders gestaltet sein, und beispielsweise einen elliptischen Querschnitt aufweisen.

Im Verbindungszustand weist das Anschlusssystem 100 einen Installationseinsatz 50 auf, der mit seiner äußeren Anlagefläche 57 mit der Hauptrohrinnenfläche 23 in Kontakt steht. Die äußere Anlagefläche 57 des Installationseinsatzes 50 ist dazu umlaufend oder zumindest teilweise umlaufend profiliert oder weist ein Dichtungselement auf, um eine fluiddichte Anlage des Installationseinsatzes 50 in der Queröffnung 30 an der Hauptrohrinnenfläche 23 des Hauptrohres 20 sicherzustellen.

Der Endabschnitt 54 des Installationseinsatzes 50 ist entlang einer Nut 56 soweit abgeschnitten, dass er im installierten Zustand des Anschlusssystems 100 dieselbe oder etwa dieselbe Länge aufweist, wie die Wandung des Hauptrohres 20 an der Hauptrohrinnenfläche 23 dick ist. Auf diese Weise sind die an der Hauptrohrinnenfläche 23 des Hauptrohres 20 durch die Herstellung der Queröffnung 30 freiliegenden Bewehrungen 22 der Bewehrungen 21 des Hauptrohres 20 von der äußeren Anlagefläche 57 des Installationseinsatzes 50 überdeckt und so vor dem Einfluss von Feuchtigkeit und Sauerstoff geschützt.

Ein solcher Installationseinsatz 50 ist einstückig geformt und kann in einfacher Weise beispielsweise in einem Spritzgussvorgang aus einem Polymermaterial und / oder einem Elastomermaterial, wie beispielsweise Kautschuk, hergestellt werden.

Bei der Installation des Anschlusssystems 100 in der Queröffnung 30 des Hauptrohres 20 kann dann eine Verpressung des für die Dichtheit vorgesehenen Installationseinsatzes 50 zur Hauptrohrinnenfläche 23 hin erfolgen, wobei die durch die Herstellung der Queröffnung 30 freiliegenden Bewehrungen 22 der Bewehrungen 21 des Hauptrohres 20 dabei von der äußeren Anlagefläche 57 des Installationseinsatzes 50 überdeckt sind. Hierdurch sind diese vor dem Einfluss von Feuchtigkeit und Sauerstoff geschützt.

In den Schraubbereich 52 an der Innenseite 53 des Installationseinsatzes 50 ist ein Anschlussstutzen 60 mit einem Außengewinde 63 eingeschraubt. Zum Einschrauben des Außengewindes 63 des Anschlussstutzens 60 in den Schraubbereich 52 des Installationseinsatzes 50 ist ein Antriebsende 64 des Anschlussstutzens 60 nutzbar. Der Anschlussstutzen 60 weist ein konisches Mittelteil 62 auf, das beim Einschrauben des Anschlussstutzens 60 in den Installationseinsatz 50 für die Herstellung der notwendigen Dichtheit zwischen der äußeren Anlagefläche 57 des Installationseinsatzes 50 und der Hauptrohrinnenfläche 23 des Hauptrohres 20 sorgt.

Der Anschlussstutzen 60 ist dabei soweit in den Installationseinsatz 50 eingeschraubt, dass der Installationseinsatz 50 ordnungsgemäß verpresst ist, um die Dichtheit des Anschlusssystems 100 herzustellen. Hierzu ist eine Vorgabe möglich, wie beispielsweise eine solche, dass das Einschrauben bis zu einer Markierung am Anschlussstutzen 60 oder beispielsweise bis zum letzten Gewindegang zu erfolgen hat.

Wenn die Montage des Anschlusssystems 100 richtig erfolgt ist, ist die Dichtheit hergestellt, sodass das Fluid beispielsweise von dem Rohr 10 in das Hauptrohr 20 einströmen kann, ohne dass Fluid an unerwünschte Stellen oder eventuell sogar nach außen in die Umwelt gelangt. Ebensowenig kann in unerwünschter Weise Fluid von außen in das Hauptrohr 20 bzw. das Anschlusssystem 100 gelangen.

In den Bereich des Antriebsendes 64 des Anschlussstutzens 60 ist das Rohr 10 zumindest teilweise eingeschoben.

Bei ordnungsgemäßer Installation des Anschlusssystems 100 ist eine fluiddichte Verbindung zwischen dem angeschlossenen Rohr 10 und dem Hauptrohr 20 derart hergestellt, dass die äußere Anlagefläche 57 des Installationseinsatzes 50 durch die Verpressung durch das Einschrauben des Anschlussstutzens 60 in diesem Bereich die Dichtheit herstellt und die Dichtheit gegen ein Hinterlaufen bzw. Hinterwandern der äußeren Anlagefläche 57 des Installationseinsatzes 50 sichergestellt ist.

In Fig. 2 ist weiter gezeigt, dass am dem der Hauptrohrinnenfläche 27 zugewandten Ende der äußeren Anlagefläche 57 des Installationseinsatzes 50 ein Aufnahmeraum 58 ausgebildet ist, um dort ein Dichtungselement 59 aufzunehmen. Bevorzugt ist das Dichtungselement 59 ein unter Zutritt von Wasser quellendes Dichtungselement 59.

Auf diese Weise kann eine verbesserte Dichtfunktion zwischen der äußeren Anlagefläche 57 des Installationseinsatzes 50 und der Hauptrohrfläche 23 des Hauptrohres 20 hergestellt werden. Sollte es dazu kommen, dass Feuchtigkeit in den Zwischenraum zwischen der äußeren Anlagefläche 57 des Installationseinsatzes 50 und der Hauptrohrinnenfläche 23 des Hauptrohres 20 gelangt, so wird das unter Zutritt von Wasser quellende Dichtungselement 59 aktiviert, expandiert und dichtet zusätzlich ab.

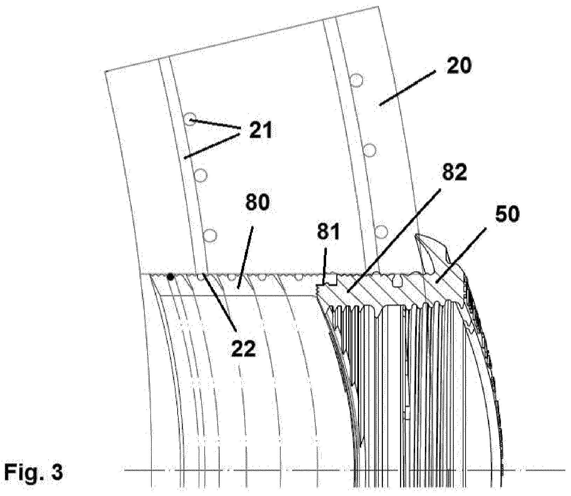

In der Fig. 3 ist in einer schematischen seitlichen geschnittenen Ansicht ein Installationseinsatz 50 in einer zweiten Ausführung gezeigt.

Die Bezugszeichen in Fig. 3 entsprechen denen aus der vorausgehenden Figur.

Das Hauptrohr 20, das aus Stahlbeton hergestellt ist, und hier nur auf der linken Seite der

Fig. 3 als Abschnitt gezeigt ist, weist Bewehrungen 21 auf.

Der Installationseinsatz 50 ist in dieser gezeigten Ausführung zweiteilig ausgebildet.

Ein Ansatzstück 80, das etwa hohlzylindrisch ausgebildet ist und ein Ende aufweist, das vom Inneren des Hauptrohrs 20 abgewandt ist, ist mittels einer Ansatzstückverbindung 81 fluiddicht und fest mit einem Basisteil 82 des Installationseinsatzes 50 zu diesem verbunden. Auf diese Weise kann das Ansatzstück 80 beispielsweise aus einem Polymermaterial gebildet sein, das andere Eigenschaften aufweist, als das Basisteil 82 des Installationseinsatzes 50.

In vorerwähnter Weise schützt die Außenoberfläche des Ansatzstückes 80 die freiliegende Bewehrung 22 der Bewehrung 21 des Hauptrohres 20 gegen die Einwirkung von Feuchtigkeit und Sauerstoff.

### Bezugszeichenliste

- 10: Rohr
- 20: Hauptrohr
- 21: Bewehrung
- 22: freiliegende Bewehrung
- 23: Hauptrohrinnenfläche
- 27: Innenoberfläche
- 30: Queröffnung
- 50: Installationseinsatz
- 51: Außenseite
- 52: konischer Schraubbereich
- 53: Innenseite
- 54: Endabschnitt
- 55: Trennkennzeichnung
- 56: Nut
- 57: äußere Anlagefläche
- 58: Aufnahmeraum
- 59: Dichtungselement
- 60: Anschlussstutzen
- 61: Eingriffsende
- 62: Mittelteil
- 63: Außengewinde
- 64: Antriebsende
- 70: Längenangabe
- 80: Ansatzstück
- 81: Ansatzstückverbindung
- 82: Basisteil
- 100: Anschlusssystem

## Patentansprüche

1. Anschlusssystem (100) zum Anschließen eines Rohres (10) an ein Hauptrohr (20), einen Schacht, oder dergleichen, an einer Queröffnung (30), wobei das Anschlusssystem (100) zu diesem Zweck mit dem Hauptrohr (20) oder dem Schacht verbindbar ist, mit
einem hohlstopfenförmigen, zumindest teilweise weichen Installationseinsatz (50), dessen Außenseite (51) an die Queröffnung (30) angepasst ist, und dessen Innenseite (53) einen konischen Schraubbereich (52) aufweist, wobei der Installationseinsatz (50) einen Endabschnitt (54) aufweist, der durch die Queröffnung (30) des Hauptrohres (20) oder Schachts in dieses / diesen teilweise einschiebbar ist, und wobei eine äußere Anlagefläche (57) des Installationseinsatzes (50) in einem Verbindungszustand, in dem das Anschlusssystem (100) mit dem Hauptrohr (20) oder Schacht verbunden ist, wenigstens teilweise eine Hauptrohrinnenfläche (23), die an die Queröffnung (30) angrenzt und diese umgibt, kontaktiert,
und
einem relativ härteren Anschlussstutzen (60), der ein Eingriffsende (61), einen konischen Mittelteil (62) mit Außengewinde (63) und ein Antriebsende (64) aufweist,
**dadurch gekennzeichnet, dass**
an dem Endabschnitt (54) wenigstens eine Trennkennzeichnung (55) ausgebildet ist, die wenigstens teilweise um den äußeren Umfang des Endabschnitts (54) umlaufend ausgebildet ist, wobei die Trennkennzeichnung (55) an die Form der Innenoberfläche (27) des Hauptrohres (20), des Schachts, oder dergleichen im Bereich der Queröffnung (30) angepasst ist.

2. Anschlusssystem (100) nach Anspruch 1, **dadurch gekennzeichnet, dass** am Endabschnitt (58) des Installationseinsatzes (50) eine Mehrzahl von Trennkennzeichnungen (55) angeordnet ist.

3. Anschlusssystem (100) nach Anspruch 1 oder 2, **dadurch gekennzeichnet, dass** am Endabschnitt (58) des Installationseinsatzes (50) eine Anzahl von 2, 3, 4, 5, 6, 7 oder 8 Trennkennzeichnungen (55) angeordnet ist.

4. Anschlusssystem (100) nach einem der vorangehenden Ansprüche, **dadurch gekennzeichnet, dass** am Endabschnitt (58) des Installationseinsatzes (50) eine Anordnung der Trennkennzeichnungen (55) ausgebildet ist, wobei wenigstens eine Trennkennzeichnung (55) zu ihren jeweiligen nächsten Nachbarn gleich beabstandet ist.

5. Anschlusssystem (100) nach einem der vorangehenden Ansprüche, **dadurch gekennzeichnet, dass** die Trennkennzeichnung (55) als Markierung oder als Schneidhilfe geformt ist.

6. Anschlusssystem (100) nach Anspruch 5, **dadurch gekennzeichnet, dass** die Schneidhilfe als Nut (56) oder als Steg ausgebildet ist, insbesondere als um den äußeren Umfang des Endabschnitts (54) umlaufende Nut (56) oder umlaufender Steg ausgebildet ist.

7. Anschlusssystem (100) nach einem der vorangehenden Ansprüche, **dadurch gekennzeichnet, dass** der Installationseinsatz (50) zweiteilig ausgebildet ist, wobei ein Ansatzstück (80), das etwa hohlzylindrisch ausgebildet ist, mittels einer Ansatzstückverbindung (81) fluiddicht und fest mit einem Basisteil (82) des Installationseinsatzes (50) zu diesem verbunden.

8. Anschlusssystem (100) nach einem der vorangehenden Ansprüche, **dadurch gekennzeichnet, dass** der Anschlussstutzen (60) ein Polymermaterial enthält oder aus einem Polymermaterial besteht, wobei das Polymermaterial bevorzugt ein Thermoplast, und besonders bevorzugt ein Polyolefin, wie beispielsweise eine Polypropylen oder ein Polyethylen oder eine Polybutylen oder ein Copolymeres der Vorgenannten, oder ein Polyvinylchlorid ist, und / oder dass der Installationseinsatz (50) ein elastomeres Polymermaterial enthält oder aus einem solchen besteht.

9. Rohrsystem mit wenigstens einem Anschlusssystem (100) nach einem der Ansprüche 1 bis 8.

## Claims

1. Connection system (100) for connecting a pipe (10) to a main pipe (20), a shaft, or the like, at a transverse opening (30), the connection system (100) being connectable for this purpose to the main pipe (20) or the shaft, comprising
a hollow stopper-shaped, at least partly soft installation insert (50), the outer side (51) of which is adapted to the transverse opening (30) and the inner side (53) of which has a conical screw region (52), wherein the installation insert (50) has an end section (54), which can be pushed partly into the main pipe (20) or shaft through the transverse opening (30) thereof, and wherein an outer bearing surface (57) of the installation insert (50), in a connection state in which the connection system (100) is connected to the main pipe (20) or shaft, is at least partly in contact with a main pipe inner surface (23), which borders and surrounds the transverse opening (30), and
a relatively harder connecting piece (60), which has an engagement end (61), a conical centre part (62) with an external thread (63), and a drive end (64),
**characterised in that**
there is formed on the end section (54) at least one separation indicator (55), which runs at least partly around the outer perimeter of the end section (54), the separation indicator (55) being adapted to the shape of the inner surface (27) of the main pipe (20), the shaft, or the like, in the region of the transverse opening (30).

2. Connection system (100) according to claim 1, **characterised in that** a plurality of separation indicators (55) is arranged on the end section (58) of the installation insert (50).

3. Connection system (100) according to claim 1 or 2, **characterised in that** 2, 3, 4, 5, 6, 7 or 8 separation indicators (55) in number are arranged on the end section (58) of the installation insert (50).

4. Connection system (100) according to one of the preceding claims, **characterised in that** an array of separation indicators (55) is formed on the end section (58) of the installation insert (50), at least one separation indicator (55) being equally spaced from its nearest neighbours.

5. Connection system (100) according to one of the preceding claims, **characterised in that** the separation indicator (55) is formed as a marker or as a cutting aid.

6. Connection system (100) according to claim 5, **characterised in that** the cutting aid is designed as a groove (56) or as a web, in particular as a groove (56) or web running around the outer perimeter of the end section (54).

7. Connection system (100) according to one of the preceding claims, **characterised in that** the installation insert (50) is designed in two pieces, wherein an adapter piece (80), which has an approximately hollow cylindrical shape, is fixedly connected to the installation insert (50) in a fluid-tight manner via a base part (82) of the installation insert (50) by means of an adapter piece connection (81).

8. Connection system (100) according to one of the preceding claims, **characterised in that** the connecting piece (60) contains a polymer material or consists of a polymer material, wherein the polymer material is preferably a thermoplastic material and particularly preferably a polyolefin, such as for example a polypropylene or a polyethylene or a polybutylene or a copolymer of the above, or is a polyvinyl chloride, and/or that the installation insert (50) contains an elastomeric polymer material or consists of such a material.

9. Pipe system having at least one connection system (100) according to one of claims 1 to 8.

## Revendications

1. Système de raccordement (100) pour raccorder un tuyau (10) à un tuyau principal (20), un puits ou similaire, au niveau d'une ouverture transversale (30), le système de raccordement (100) pouvant être relié à cet effet au tuyau principal (20) ou au puits, comprenant
un insert d'installation (50) en forme de bouchon creux, au moins partiellement souple, dont le côté extérieur (51) est adapté à l'ouverture transversale (30), et dont le côté intérieur (53) présente une zone de vissage conique (52), l'insert d'installation (50) présentant une section d'extrémité (54) qui peut être partiellement insérée à travers l'ouverture transversale (30) du tuyau principal (20) ou du puits dans celui-ci, et une surface d'application extérieure (57) de l'insert d'installation (50) étant, dans un état de liaison, dans lequel le système de raccordement (100) est relié au tuyau principal (20) ou au puits, au moins partiellement en contact avec une surface intérieure de tuyau principal (23) qui est adjacente à l'ouverture transversale (30) et entoure celle-ci, et
une tubulure de raccordement (60) relativement plus dure, qui présente une extrémité d'engagement (61), une partie centrale conique (62) comprenant un filetage extérieur (63) et une extrémité d'entraînement (64),
**caractérisé en ce que**
au moins un repère de séparation (55) est réalisé sur la section d'extrémité (54), qui est réalisé au moins partiellement sous forme périphérique autour de la circonférence extérieure de la section d'extrémité (54), le repère de séparation (55) étant adapté à la forme de la surface intérieure (27) du tuyau principal (20), du puits ou similaire dans la zone de l'ouverture transversale (30).

2. Système de raccordement (100) selon la revendication 1, **caractérisé en ce qu'**une pluralité de repères de séparation (55) sont agencés sur la section d'extrémité (58) de l'insert d'installation (50).

3. Système de raccordement (100) selon la revendication 1 ou 2, **caractérisé en ce qu'**un nombre de 2, 3, 4, 5, 6, 7 ou 8 repères de séparation (55) sont agencés sur la section d'extrémité (58) de l'insert d'installation (50).

4. Système de raccordement (100) selon l'une quelconque des revendications précédentes, **caractérisé en ce qu'**un agencement des repères de séparation (55) est réalisé sur la section d'extrémité (58) de l'insert d'installation (50), au moins un repère de séparation (55) étant équidistant de ses voisins respectifs les plus proches.

5. Système de raccordement (100) selon l'une quelconque des revendications précédentes, **caractérisé en ce que** le repère de séparation (55) est formé comme un marquage ou comme une aide à la coupe.

6. Système de raccordement (100) selon la revendication 5, **caractérisé en ce que** l'aide à la coupe est réalisée sous forme de rainure (56) ou sous forme de nervure, notamment est réalisée sous forme de rainure périphérique (56) ou de nervure périphérique autour de la circonférence extérieure de la section d'extrémité (54).

7. Système de raccordement (100) selon l'une quelconque des revendications précédentes, **caractérisé en ce que** l'insert d'installation (50) est réalisé en deux parties, un embout (80), qui est réalisé sous forme approximativement cylindrique creuse, étant relié de manière étanche aux fluides et fixe à une partie de base (82) de l'insert d'installation (50) au moyen d'une liaison d'embout (81).

8. Système de raccordement (100) selon l'une quelconque des revendications précédentes, **caractérisé en ce que** la tubulure de raccordement (60) contient un matériau polymère ou est constituée d'un matériau polymère, le matériau polymère étant de préférence un thermoplastique, et de manière particulièrement préférée une polyoléfine, comme par exemple un polypropylène ou un polyéthylène ou un polybutylène ou un copolymère des précédents, ou un chlorure de polyvinyle, et/ou **en ce que** l'insert d'installation (50) contient un matériau polymère élastomère ou est constitué d'un tel matériau.

9. Système de tuyau comprenant au moins un système de raccordement (100) selon l'une quelconque des revendications 1 à 8.
